# EUROPÄISCHE PATENTSCHRIFT

(11) **EP 3 580 096 B1**
(45) Veröffentlichungstag und Bekanntmachung des Hinweises auf die Patenterteilung: **09.03.2022**
(21) Anmeldenummer: 18701657.1
(22) Anmeldetag: 16.01.2018
(51) Int. Cl.: B60Q 11/00, B60Q 3/80

(54) **SCHEINWERFER FÜR KRAFTFAHRZEUGE MIT ZUMINDEST EINER LICHTQUELLE**
HEADLIGHT FOR MOTOR VEHICLES, COMPRISING AT LEAST ONE LIGHT SOURCE
PHARE DE VÉHICULES AUTOMOBILES COMPRENANT AU MOINS UNE SOURCE DE LUMIÈRE

(30) Priorität: 13.02.2017 AT 501142017
(43) Veröffentlichungstag der Anmeldung: 18.12.2019
(73) Patentinhaber: ZKW Group GmbH, 3250 Wieselburg (AT)
(72) Erfinder: PIRRINGER, Erik, 3250 Wieselburg (AT)
(74) Vertreter: Patentanwaltskanzlei Matschnig & Forsthuber OG
(86) Internationale Anmeldenummer: PCT/AT2018/060011
(87) Internationale Veröffentlichungsnummer: WO 2018/145135

(56) Entgegenhaltungen:
- DE-A1-102004 006 404
- DE-A1-102012 018 520
- DE-C- 415 503

## Beschreibung

Die Erfindung bezieht sich auf einen Scheinwerfer für Kraftfahrzeuge mit zumindest einer Lichtquelle, die an einer Versorgungsleitung liegt, welche mit Hilfe eines Schalters an eine Stromquelle des Kraftfahrzeuges schaltbar ist, in dem Scheinwerfer ein interner elektrischer Energiespeicher angeordnet ist, der gleichfalls mit der Versorgungsleitung und mit der zumindest einen Lichtquelle verbunden ist, und bei einem Abfall/Ausfall der Spannung an der Versorgungsleitung die Lichtquelle für eine Restleuchtdauer von dem internen elektrischen Energiespeicher gespeist wird.

Wenn im Zusammenhang mit der vorliegenden Erfindung von einem "Scheinwerfer" gesprochen wird, so ist darunter eine zum Einbau in ein Kraftfahrzeug bestimmte Einheit zu verstehen, die Beleuchtungszwecken dient, wobei es sich auch um ein Scheinwerfermodul handeln kann und beispielsweise zwei Module, eines für Fernlicht, eines für Abblendlicht, den Scheinwerfer bilden können. Ein Beleuchtungsmodul wird bevorzugt jedoch nicht notwendigerweise zur Beleuchtung des Verkehrsraums vor dem Fahrzeug dienen.

Ein die Verkehrssicherheit gefährdendes Problem liegt in einem Zusammenbruch der Versorgungsspannung für einen Scheinwerfer. Diese Situation kann beispielsweise durch eine Leitungsunterbrechung hervorgerufen werden, die unter Umständen durch ein Lösen einer nicht gut gesicherten Steckverbindung aufgrund von Vibrationen auftreten kann. Natürlich führt auch ein Zusammenbruch oder ein drastisches Absinken der Spannung des Fahrzeugakkumulators zu einer solchen Situation.

Es ist zwar bekannt, den Ausfall einer Lichtquelle dem Fahrer an einem Display zu signalisieren, doch ist dadurch das Problem des überraschenden Lichtausfalls mit der dadurch verbundenen Gefährdungssituation nicht behoben.

So beschreibt die DE 10 2013 001 976 B3 einen Scheinwerfer der eingangs genannten Art. Das Dokument DE 10 2012 018 520 A1 offenbart eine autarke Energieversorgungseinheit, welche im Notfall die Energieversorgung einer Warnleuchte übernimmt. Das Einschalten wird beispielsweise durch einen Unfall ausgelöst, kann jedoch auch händisch erfolgen. Es wird hier keine Signalleitung an die autarke Energieversorgungseinheit geschaltet noch wird eine Restleuchtdauer angezeigt. Die WO 03/057536 A1 zeigt bei einem Kraftfahrzeug das Umschalten auf ein Hilfsstromsystem, wobei eine Diode einen Energierückfluss verhindert. Auch hier wird keine Signalleitung, die zu einem Anzeigemittel für den Benutzer führt, an einen internen Energiespeicher geschaltet, noch wird eine Restleuchtdauer angezeigt. Gemäß dem Dokument DE 10 2004 006 404 A1 wird eine Notleuchte aktiviert, jedoch immer in Zusammenhang mit der Auslösung eines Unfallsensors. Wie dem Dokument entnehmbar ist, war es zuvor bekannt, bei einem Unfall eine Notleuchte auszulösen, und demgegenüber beschäftigt sich nun dieses Dokument mit der Möglichkeit, dass beispielsweise nicht genügend Versorgungsspannung für die Notleuchte vorhanden ist, und schlägt daher vor, bei Auslösung eines Unfallsensors und zu geringer Spannung oder einem anderen Ausfall des Beleuchtungssystems eine Pufferbatterie an die Notleuchte zu schalten.

Eine Aufgabe der Erfindung liegt darin, eine Abmilderung der Gefahren bei einem Ausfall der Spannung der Versorgungsleitung zu ermöglichen.

Diese Aufgabe wird ausgehend von einem Scheinwerfer der eingangs genannten Art erfindungsgemäß dadurch gelöst, dass der interne elektrische Energiespeicher über eine Diode an der Versorgungsleitung liegt und zur Überwachung der Spannung der Versorgungsleitung in dem Scheinwerfer eine Überwachungseinrichtung mit einem von ihr angesteuerten Schalter angeordnet ist, welche bei Abfall der Spannung an der Versorgungsleitung eine zu einem Anzeigemittel für einen Benutzer führende Signalleitung an den internen Energiespeicher schaltet.

Dank der Erfindung kann bei einem Ausfall oder drastischen Abfall der Spannung an der Versorgungsleitung noch eine gewisse Zeit lang ein Notbetrieb aufrechterhalten werden. Eine von dem internen Energiespeicher gespeiste Anzeige ist für den Fahrer des Kraftfahrzeuges äußerst wichtig, damit er tatsächlich auf den Ausfall der eigentlichen Versorgungsspannung hingewiesen wird und Gegenmaßnahmen treffen sowie ab diesem Augenblick eine erhöhte Aufmerksamkeit dem Fahrbetrieb zuwenden kann. Dabei wird verhindert, dass Strom von dem Energiespeicher in Richtung der externen Energieversorgung abfließt.

Weiters empfiehlt es sich, wenn das Anzeigemittel zur Anzeige der Restleuchtdauer der zumindest einen Lichtquelle bei Versorgung ausschließlich von dem elektrischen Energiespeicher eingerichtet ist.

Bei einer praxisgerechten Variante kann auch vorgesehen sein, dass die Versorgungsleitung und die Lichtquelle über einen Arbeitskontakt eines Relais zu dem internen elektrischen Energiespeicher geführt ist, wobei die Spule des Relais an dem Ausgang einer verknüpften Einheit, bestehend aus einem AND-Gatter und einem Inverter, liegt, dessen beide Eingänge einerseits über den Schalter und andererseits direkt an der Versorgungsleitung liegen.

Empfehlenswert ist es, falls der elektrische Energiespeicher ein Akkumulator ist.

Andererseits kann es auch günstig sein, falls der elektrische Energiespeicher ein Superkondensator ist.

Bei einer vorteilhaften Ausführung kann vorgesehen sein, dass eine bei Versorgung durch den internen Energiespeicher wirksame Dimmeinrichtung für die zumindest eine Lichtquelle vorgesehen ist. Hierbei ist es günstig, wenn die Dimmeinrichtung ein zwischen dem internen Energiespeicher und der Lichtquelle liegender Vorwiderstand ist.

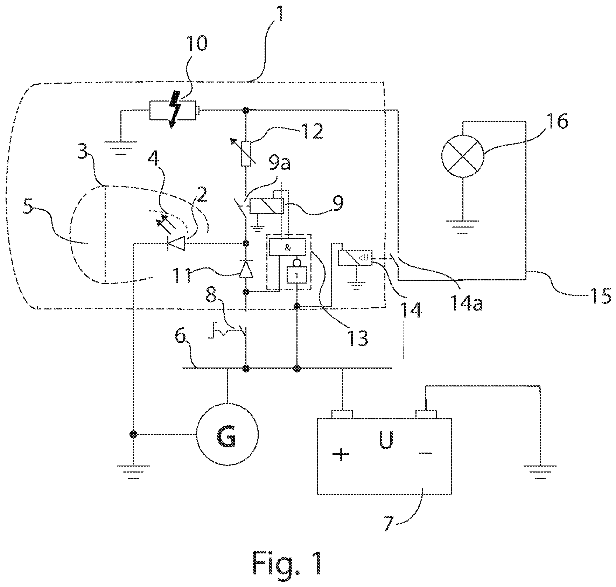

Die Erfindung samt weiteren Vorteilen ist im Folgenden an Hand einer beispielsweisen Ausführungsform näher erläutert. Die in der Zeichnung veranschaulicht ist. In dieser zeigt Fig. 1 in einer schematischen Ansicht ein Beleuchtungsmodul nach der Erfindung.

In Fig. 1 sind die Umrisse eines Scheinwerfers 1 eingezeichnet, in dessen Inneren sich eine Lichtquelle 2, im vorliegenden Fall eine LED befindet. Diese Lichtquelle 2 ist in einer Beleuchtungseinheit 3 angeordnet, welche zur Lichtführung beispielsweise einen Reflektor 4 und eine Linse 5 besitzt.

Eine Versorgungsleitung 6 liegt an einer Stromquelle 7 des Kraftfahrzeuges, die insbesondere als Akkumulator ausgeführt ist, welcher die Versorgungsspannung U liefert und der bei einem von einem Verbrennungsmotor betriebenen Fahrzeug von einem Generator G aufgeladen werden kann. An diese Versorgungsleitung 6 ist die Lichtquelle 2 mit Hilfe eines Schalters 8 schaltbar, wobei bei eingeschaltetem Schalter 8 ein Stromfluss von der Versorgungsleitung 6 über die Lichtquelle 2 gegen Masse erfolgt, da ein Pol, üblicherweise der Pluspol der Stromquelle 7 mit der Versorgungsleitung 8 verbunden ist, wogegen der andere Pol der Stromquelle 7, hier der Minuspol an Masse liegt.

Die Versorgungsleitung 6 und die Lichtquelle 2 sind weiters über einen Arbeitskontakt 9a eines Relais 9 zu einem internen elektrischen Energiespeicher 10 geführt, der in noch zu erläuternder Weise bei Ausfall der Hauptstromversorgung die Lichtquelle 2 eine bestimmte Zeitdauer lang speisen soll. Dieser Energiespeicher 10 ist innerhalb des Scheinwerfers 1 angeordnet und kann beispielsweise als Akkumulator oder als Superkondensator ausgebildet sein.

In dem Versorgungspfad für den Energiespeicher 10 liegt eine Diode 11, deren Funktion darin liegt, einen Stromfluss von dem Energiespeicher 10 in ein defektes Bordnetz zu verhindern, wenn beispielsweise die Versorgungsleitung eine niedrigere Spannung als der Energiespeicher 10 aufweist oder gegen Masse kurzgeschlossen ist.

Die Diode 11 liegt zwischen dem Anschluss der Lichtquelle 2 und der Versorgungsleitung 6.

Man erkennt weiters, dass zwischen dem Anschluss des Energiespeichers 10 und dem Anschluss der Lichtquelle 2 ein Widerstand 12 liegt, der vorzugsweise einstellbar ist.

Das Relais 9, d.h. dessen Spule, liegt im vorliegenden Fall an dem Ausgang einer verknüpften Einheit 13, bestehend aus einem AND-Gatter und Inverter, dessen beide Eingänge einerseits über den Schalter 8 und andererseits direkt an der Versorgungsleitung 6 liegen.

Ein weiteres Relais 14 liegt ständig an der Versorgungsleitung 6, wobei ein Arbeitskontakt 14a offen ist, solange die Spulenspannung des Relais 14 nicht unter einen Grenzwert absinkt. Dieser Kontakt 14a ist einerseits mit dem Energiespeicher 10 und andererseits mit einer Signalleitung 15 verbunden, die zu einem Anzeigemittel 16 für einen Benutzer führt.

Im Folgenden soll die nähere Funktion des Schweinwerfers bzw. dessen für die Erfindung wesentlichen Einzelkomponenten näher erläutert werden.

Wenn durch einen Benutzer oder die Bordelektronik der Schalter 8 geschlossen wird, um die Lichtquelle des Scheinwerfers 1 einzuschalten, fließt ein Strom von der Leitung 6 über die Diode 11 und die Lichtquelle 2 gegen Masse. Da an beiden Eingängen der verknüpften Einheit 13 die Versorgungsspannung U liegt, ist das Relais 9 stromlos und der Kontakt 9r geschlossen, sodass über diesen Kontakt und den Widerstand 12 der interne Energiespeicher 10 aufgeladen wird bzw. an der Spannung U liegt. Dies ist die Normalfunktion.

Falls bei geschlossenem Schalter 8 die Versorgungsspannung zusammenbricht, liegt an beiden Eingängen der verknüpften Einheit die Spannung Null oder eine für das kombinierte Glied als Null geltende Spannung, sodass der Arbeitskontakt 9a des Relais 9 dann gleichfalls geschlossen ist und nun die Lichtquelle 2 von dem internen elektrischen Energiespeicher 10 versorgt wird.

Um ein Beispiel zu geben, werde von einer Lichtquelle für Abblendlicht mit 30 W ausgegangen. Damit die Lichtquelle etwa eine Minute lang versorgt werden kann, ist ein interner elektrischer Energiespeicher 10 mit 12 V und 50 mAh erforderlich. Dies würde einer Kapazität eines Superkondensators von ca. 25 F entsprechen. Bei verminderter Helligkeit kann eine längere Restleuchtdauer abhängig von dem Wert des Widerstandes 12 erreicht werden.

Eine weitere Funktion des Widerstandes 12 ist eine Strombegrenzung, die erwünscht sein kann, um insbesondere bei Verwendung eines Superkondensators eine unzulässig hohen Ladestrom zu vermeiden, der gegebenenfalls den Energiespeicher 10 und/oder die Diode 11 gefährden könnte.

Da eine Signalisierung an den Benutzer des Fahrzeugs bei einem Ausfall oder Abfall der Spannung an der Versorgungsleitung 6 gewünscht ist, ist zur Überwachung der Spannung der Versorgungsleitung 6 in dem Scheinwerfer eine Überwachungseinrichtung mit einem von ihr angesteuerten Schalter angeordnet, welche bei Abfall der Spannung an der Versorgungsleitung die zu dem Anzeigemittel 16 für einen Benutzer führende Signalleitung 15 an den internen Energiespeicher 10 schaltet. Im gezeigten Ausführungsbeispiel dient hierzu das Relais 14, welches den Arbeitskontakt 14a offen hält, solange die Versorgungsspannung U nicht unter einen gewissen Wert absinkt. Anderenfalls, insbesondere bei einem vollständigen Ausfall der Versorgungsspannung U an der Leitung 6, schließt der Schalter 14a und das Anzeigemittel 16 für den Benutzer wird an den internen Energiespeicher 10 geschaltet. Dieses Anzeigemittel kann beispielsweise eine Leuchtanzeige sein, welche dem Benutzer den Ausfall der Lichtquelle und deren Restleuchtdauer signalisiert, oder eine auf einem Boarddisplay aufscheinende Mitteilung.

Die gezeigte Ausbildung der Schalteinrichtungen als Relais ist nur eine von vielen Möglichkeiten, welche der Fachmann bei Kenntnis des Grundgedankens der Erfindung zur Realisierung heranziehen kann. Selbstverständlich sind vollelektronische Überwachungs- und Schalteinrichtungen ebenso möglich, doch ist die gezeigte Verwendung von Relais relativ kostengünstig und ausfallssicher.

Die erfindungsgemäße Lösung schließt natürlich nicht aus, dass auch die Funktion der Lichtquelle in bekannter Weise überwacht wird, da die Anwendung der Erfindung eine an sich funktionierende Lichtquelle voraussetzt.

Wenngleich die Erfindung in erster Linie einen Scheinwerfer betrifft, da hier besonderes Augenmerk auf die Sicherheit zu lenken ist, so könnte sie auch bei anderen Beleuchtungseinrichtungen eines Kraftfahrzeuges angewendet werden, beispielsweise bei Rückfahrleuchten, Zusatzscheinwerfern, Blink- und Bremsleuchten und Innenraumbeleuchtungen.

### Liste der Bezugszeichen

- 1: Scheinwerfer
- 2: Lichtquelle
- 3: Beleuchtungseinheit
- 4: Reflektor
- 5: Linse
- 6: Versorgungsleitung
- 7: Stromquelle
- 8: Schalter
- 9: Relais
- 9r: Arbeitskontakt
- 10: Energiespeicher
- 11: Diode
- 12: Widerstand
- 13: verknüpfte Einheit bestehend aus AND-Gatter und Inverter
- 14: Relais
- 14r: Arbeitskontakt
- 15: Signalleitung
- 16: Anzeigemittel
- G: Generator
- U: Spannung

## Patentansprüche

1. Scheinwerfer (1) für Kraftfahrzeuge mit zumindest einer Lichtquelle (2), die an einer Versorgungsleitung (6) liegt, welche mit Hilfe eines Schalters (8) an eine Stromquelle (7) des Kraftfahrzeuges schaltbar ist, in dem Scheinwerfer ein interner elektrischer Energiespeicher (10) angeordnet ist, der gleichfalls mit der Versorgungsleitung (6) und mit der zumindest einen Lichtquelle (2) verbunden ist, und bei einem Abfall/ Ausfall der Spannung (U) an der Versorgungsleitung die Lichtquelle für eine Restleuchtdauer von dem internen elektrischen Energiespeicher (10) gespeist wird, **dadurch gekennzeichnet, dass** der interne elektrische Energiespeicher (10) über eine Diode (11) an der Versorgungsleitung (6) liegt und zur Überwachung der Spannung (U) der Versorgungsleitung (6) in dem Scheinwerfer eine Überwachungseinrichtung (14) mit einem von ihr angesteuerten Schalter (14a) angeordnet ist, welche bei Abfall der Spannung an der Versorgungsleitung eine zu einem Anzeigemittel (16) für einen Benutzer führende Signalleitung (15) an den internen Energiespeicher (10) schaltet.

2. Scheinwerfer nach Anspruch 1, **dadurch gekennzeichnet, dass** das Anzeigemittel (16) zur Anzeige der Restleuchtdauer der zumindest einen Lichtquelle (2) bei Versorgung ausschließlich von dem elektrischen Energiespeicher (10) eingerichtet ist.

3. Scheinwerfer nach Anspruch 1 oder 2, **dadurch gekennzeichnet, dass** die Überwachungseinrichtung (14) mit einem von ihr angesteuerten Schalter (14a) von einem Relais mit Arbeitskontakt gebildet ist, wobei die Relaisspule an der Versorgungsleitung (6) liegt und die Spannung (U) an dem internen elektrischen Energiespeicher (10) über den Arbeitskontakt an die Signalleitung schaltbar ist und das Relais den Arbeitskontakt offen hält, solange die Versorgungsspannung (U) nicht unter einen gewissen Wert absinkt.

4. Scheinwerfer nach einem der Ansprüche 1 bis 3, **dadurch gekennzeichnet, dass** elektrische Energiespeicher (10) ein Akkumulator ist

5. Scheinwerfer nach einem der Ansprüche 1 bis 3, **dadurch gekennzeichnet, dass** der elektrische Energiespeicher (10) ein Superkondensator ist

6. Scheinwerfer nach einem der Ansprüche 1 bis 5, **dadurch gekennzeichnet, dass** eine bei Versorgung durch den internen Energiespeicher (10) wirksame Dimmeinrichtung (12) für die zumindest eine Lichtquelle (2) vorgesehen ist.

7. Scheinwerfer nach Anspruch 6, **dadurch gekennzeichnet, dass** die Dimmeinrichtung (12) ein zwischen dem internen Energiespeicher (10) und der Lichtquelle (2) liegender Vorwiderstand ist.

8. Scheinwerfer nach einem der Ansprüche 1 bis 7, **dadurch gekennzeichnet, dass** die Versorgungsleitung (6) und die Lichtquelle (2) über einen Arbeitskontakt (9a) eines Relais (9) zu dem internen elektrischen Energiespeicher (10) geführt ist, wobei die Spule des Relais (9) an dem Ausgang einer verknüpften Einheit (13), bestehend aus AND-Gatter und Inverter, liegt, dessen beide Eingänge einerseits über den Schalter (8) und andererseits direkt an der Versorgungsleitung (6) liegen.

## Claims

1. Headlamp (1) for motor vehicles, having at least one light source (2) which is connected to a supply line (6) which can be connected to a power source (7) of the motor vehicle with the aid of a switch (8), an internal electrical energy store (10) is arranged in the headlamp and is likewise connected to the supply line (6) and to the at least one light source (2), and, in the event of a drop/failure of the voltage (U) on the supply line, the light source is supplied by the internal electrical energy store (10) for a residual illumination period, **characterized in that** the internal electrical energy store (10) is connected to the supply line (6) via a diode (11) and, for monitoring the voltage (U) of the supply line (6), a monitoring device (14) with a switch (14a) controlled by it is arranged in the headlamp, which device switches a signal line (15) leading to an indicating means (16) for a user to the internal energy store (10) when the voltage on the supply line drops.

2. Headlamp according to claim 1, **characterized in that** the indicating means (16) is arranged to indicate the remaining illumination time of the at least one light source (2) when supplied exclusively by the electrical energy storage device (10).

3. Headlamp according to claim 1 or 2, **characterized in that** the monitoring device (14) with a switch (14a) actuated by it is formed by a relay with a normally open contact, the relay coil being connected to the supply line (6) and the voltage (U) at the internal electrical energy store (10) being switchable to the signal line via the normally open contact and the relay keeping the normally open contact open as long as the supply voltage (U) does not drop below a certain value.

4. Headlamp according to one of claims 1 to 3, **characterized in that** electrical energy storage means (10) is an accumulator

5. Headlamp according to one of claims 1 to 3, **characterized in that** the electrical energy storage device (10) is a supercapacitor

6. Headlamp according to one of claims 1 to 5, **characterized in that** a dimming device (12) which is effective when supplied by the internal energy store (10) is provided for the at least one light source (2).

7. Headlamp according to claim 6, **characterized in that** the dimming device (12) is a series resistor located between the internal energy store (10) and the light source (2).

8. Headlamp according to any one of claims 1 to 7, **characterized in that** the supply line (6) and the light source (2) are led to the internal electrical energy store (10) via a normally open contact (9a) of a relay (9), the coil of the relay (9) being connected to the output of a linked unit (13) consisting of AND gate and inverter, the two inputs of which are connected on the one hand via the switch (8) and on the other hand directly to the supply line (6).

## Revendications

1. Projecteur (1) de véhicule automobile comportant au moins une source lumineuse (2) reliée à une ligne d'alimentation (6) qui peut être connectée à une source de courant (7) du véhicule à l'aide d'un commutateur (8), un accumulateur d'énergie électrique interne (10) étant disposé dans le projecteur et étant également relié à la ligne d'alimentation (6) et à la source lumineuse (2) au nombre d'au moins une, et en cas de chute/défaillance de la tension (U) sur la ligne d'alimentation, la source lumineuse étant alimentée par l'accumulateur d'énergie électrique interne (10) pour une durée d'éclairage résiduelle, **caractérisé en ce que** l'accumulateur d'énergie électrique interne (10) est relié à la ligne d'alimentation (6) par l'intermédiaire d'une diode (11) et **en ce que**, pour surveiller la tension (U) de la ligne d'alimentation (6), un dispositif de surveillance (14) est disposé dans le projecteur avec un commutateur (14a) commandé par celui-ci, lequel, en cas de chute de la tension sur la ligne d'alimentation, commute une ligne de signal (15) menant à un moyen d'affichage (16) pour un utilisateur vers l'accumulateur d'énergie interne (10).

2. Projecteur selon la revendication 1, **caractérisé en ce que** le moyen d'affichage (16) est agencé pour afficher la durée d'éclairage résiduelle de ladite au moins une source lumineuse (2) lorsqu'elle est alimentée exclusivement par l'accumulateur d'énergie électrique (10).

3. Projecteur selon la revendication 1 ou 2, **caractérisé en ce que** le dispositif de surveillance (14) est formé, avec un commutateur (14a) qu'il commande, par un relais à contact de travail, la bobine du relais étant située sur la ligne d'alimentation (6) et la tension (U) aux bornes de l'accumulateur d'énergie électrique interne (10) pouvant être commutée sur la ligne de signalisation par l'intermédiaire du contact de travail et le relais maintenant le contact de travail ouvert tant que la tension d'alimentation (U) ne descend pas en dessous d'une certaine valeur.

4. Projecteur selon l'une des revendications 1 à 3, **caractérisé en ce que** l'accumulateur d'énergie électrique (10) est un accumulateur.

5. Projecteur selon l'une des revendications 1 à 3, **caractérisé en ce que** l'accumulateur d'énergie électrique (10) est un supercondensateur.

6. Projecteur selon l'une des revendications 1 à 5, **caractérisé en ce qu'**il est prévu un dispositif de gradation (12) pour l'au moins une source lumineuse (2), efficace en cas d'alimentation par l'accumulateur d'énergie interne (10).

7. Projecteur selon la revendication 6, **caractérisé en ce que** le dispositif de variation (12) est une résistance série située entre l'accumulateur d'énergie interne (10) et la source lumineuse (2).

8. Projecteur selon l'une des revendications 1 à 7, **caractérisé en ce que** la ligne d'alimentation (6) et la source lumineuse (2) sont reliées à l'accumulateur d'énergie électrique interne (10) par l'intermédiaire d'un contact de travail (9a) d'un relais (9), la bobine du relais (9) étant située à la sortie d'une unité combinée (13) composée d'une porte AND et d'un inverseur, dont les deux entrées sont situées d'une part par l'intermédiaire du commutateur (8) et d'autre part directement sur la ligne d'alimentation (6).
